# FASCICULE DE BREVET EUROPEEN

(11) **EP 2 799 333 B1**
(45) Date de publication et mention de la délivrance du brevet: **30.09.2015**
(21) Numéro de dépôt: 14001408.5
(22) Date de dépôt: 17.04.2014
(51) Int. Cl.: B64C 27/467, B64C 27/82

(54) **Rotor caréné d'aéronef, et giravion**
Ummantelter Rotor eines Luftfahrzeugs, und Drehflügler
Shrouded aircraft rotor, and rotorcraft

(30) Priorité: 03.05.2013 FR 1301033
(43) Date de publication de la demande: 05.11.2014
(73) Titulaire: Airbus Helicopters, 13725 Marignane Cedex (FR)
(72) Inventeur: Certain, Bernard, 13090 Aix en Provence (FR)
(74) Mandataire: GPI & Associés

(56) Documents cités:
- EP-A1- 0 493 303
- DE-A1-102007 062 490
- FR-A1- 2 271 121
- FR-A1- 2 628 062

## Description

La présente invention concerne un rotor caréné d'un giravion, ainsi qu'un giravion muni d'un tel rotor, et plus particulièrement un rotor arrière d'un hélicoptère.

L'invention se situe donc dans le domaine technique restreint des rotors d'aéronefs.

Par exemple, un hélicoptère comporte généralement un unique rotor principal entraîné mécaniquement par au moins un moteur, le rotor principal assurant la sustentation et la propulsion de l'hélicoptère.

Ce type d'hélicoptère est alors pourvu d'un rotor arrière qui assure une fonction anticouple afin de compenser le couple de lacet créé par la rotation du rotor principal en exerçant une poussée transversale.

De plus, le rotor arrière permet au pilote de contrôler les évolutions en lacet et en virage de l'hélicoptère en exerçant une poussée transversale positive ou négative.

On connaît un rotor arrière non caréné, dénommé « rotor arrière classique » par commodité, remplissant cette fonction. Classiquement, le rotor arrière non caréné est monté latéralement sur une extrémité supérieure de l'empennage ou sur une extrémité de la poutre de queue de l'hélicoptère.

Ce rotor arrière non caréné est couramment utilisé. Néanmoins, il est possible d'implémenter un rotor arrière caréné, connu sous la marque fenestron® par exemple.

Le rotor arrière caréné comprend un rotor agencé dans une veine ménagée dans la dérive verticale d'un hélicoptère, l'axe de symétrie de la veine étant sensiblement perpendiculaire au plan vertical de symétrie antéropostérieur de l'hélicoptère.

Par suite, la structure profilée de la dérive verticale de l'hélicoptère entoure ladite veine et donc le rotor arrière, ce qui explique cette dénomination de « rotor arrière caréné ». On note que cette structure profilée est généralement dénommée « carène » par l'homme du métier. On nomme un tel rotor « rotor caréné » par commodité dans la suite de la description.

La structure profilée protège alors le rotor arrière contre les impacts créés par des éléments extérieurs à l'aéronef. De même, la structure profilée augmente la sécurité du personnel au sol, en évitant que ce personnel puisse être blessé par le rotor arrière.

La structure profilée qui entoure la veine, dans laquelle est agencé le rotor arrière, empêche une diffusion des bruits vers l'avant, vers le bas et vers l'arrière du giravion, alors qu'un rotor arrière non caréné diffuse du bruit dans toutes les directions.

Classiquement, un rotor caréné comprend un rotor muni d'un moyeu portant une pluralité de pales qui évoluent en rotation dans la veine de la carène.

Chaque pale peut être fixée au moyeu par exemple par une lame pouvant se déformer en torsion dénommée parfois « lame torsible ». Des paliers munis d'éléments en élastomère sont agencés entre chaque pale et le corps du moyeu. Les paliers autorisent une liberté de mouvement à la pale en rotation autour d'un axe de pas pour un changement de pas et aussi une certaine liberté de mouvement en battement et en traînée.

Par ailleurs, chaque pale peut comprendre une collerette portant un levier de pas. Les leviers de pas du rotor sont alors reliés à un disque de commande du pas. L'aéronef inclut par conséquent un moyen de commande pour piloter le pas des pales via ce disque de commande. Classiquement, un tel moyen de commande comprend un palonnier.

En outre, chaque pale peut comprendre au moins une masse d'équilibrage, telle que des masses dénommées « masse chinoise ».

Par ailleurs, une pale de rotor caréné présente usuellement une forme rectangulaire et un vrillage important.

On rappelle que le vrillage géométrique d'une pale peut se définir par l'angle formé entre l'axe de la corde de chaque section de la pale avec un plan de référence de cette pale. Parfois, on vrille chaque section de la pale par rapport à l'axe de variation de pas de cette pale d'un angle repéré par rapport à un tel plan de référence. Dans ces conditions, on appelle « loi de vrillage » l'évolution desdits angles de vrillage selon l'envergure de la pale.

Les pales d'un rotor caréné présentent un fort vrillage, l'angle de vrillage séparant deux sections distinctes pouvant être de l'ordre de 20 degrés par exemple.

En effet, les flux d'air en amont des pales dans la veine présentent une incidence variant en fonction de l'envergure de la pale. Ainsi, l'incidence du flux d'air par rapport à un pied de la pale est usuellement différente de l'incidence du flux d'air en amont d'une extrémité distale de la pale.

Pour générer une vitesse induite homogène, un constructeur vrille chaque pale pour prendre en considération ces différences d'incidences.

Par ailleurs, le moyeu est entraîné en rotation par une boîte de transmission de puissance fixée à la carène par exemple par des barres de maintien en aval du rotor. Ces barres de maintien peuvent être profilées pour représenter des aubes fixes redressant le flux d'air en aval du rotor. Dès lors, on appelle parfois l'assemblage comprenant ces barres de maintien « stator-redresseur » de flux d'air.

On note que les termes « amont » et « aval » sont définis par rapport au sens de circulation de l'air au travers de la veine.

On comprend que l'on entend par la suite par « rotor caréné » l'ensemble comportant notamment la carène, le rotor en tant que tel, la boîte de transmission de puissance et les aubes présentes en aval des pales. Le rotor caréné inclut donc notamment la carène et les éléments présents à l'intérieur de la veine définie par cette carène.

Le document FR 1531536 présente un rotor arrière caréné. Chaque pale comporte un élément allongé capable de torsion fixé à un moyeu à l'aide d'un boulon. L'élément allongé peut comprendre une pluralité de lames minces accolées entre elles.

Le document FR 2719554 présente un rotor anticouple caréné à pales flottantes. Chaque pale est reliée à un moyeu par une partie d'emplanture comprenant au moins un bras torsible autour d'un axe de changement de pas. Le bras est alors logé dans un manchon de pied de pale présentant deux portées par lesquelles le manchon est monté tourillonnant avec un jeu radial dans deux paliers du moyeu.

Le document EP 1778951 présente un dispositif anticouple pour hélicoptère. Ce dispositif comporte des pales en forme de cimeterre.

Dans ces conditions, les rotors carénés présentent des caractéristiques fonctionnelles intéressantes.

Cependant, le comportement d'un rotor arrière caréné d'un giravion peut différer du comportement d'un rotor arrière non caréné. Ce comportement peut être illustré par une courbe de fonctionnement présentant la poussée développée par un rotor arrière en fonction de la position d'un moyen de commande du pas des pales du rotor arrière, la position d'un palonnier par exemple.

La courbe de fonctionnement d'un rotor arrière classique non caréné est sensiblement linéaire.

Par contre, la courbe de fonctionnement d'un rotor arrière caréné présente un palier relativement plat lorsque le moyen de commande se trouve dans une plage intermédiaire requérant une poussée faible voire nulle. Cette plage intermédiaire correspond à une phase de vol intermédiaire se produisant entre une phase requérant une poussée dirigée selon le sens de rotation du rotor principal et une phase requérant une poussée selon le sens contraire au sens de rotation du rotor principal.

Autrement dit, durant cette phase de vol intermédiaire, une modification de la position du moyen de commande n'induit pas une modification de poussée équivalente à la modification de poussée obtenue lors des phases stationnaire pour une même amplitude de commande.

Cette caractéristique est connue. Dès lors, un pilote sait par exemple qu'il convient de déplacer le moyen de commande sur une plus grande distance pour obtenir une réaction du rotor arrière caréné durant une phase de vol intermédiaire. Cette situation peut être inconfortable, mais demeure acceptable compte tenu des avantages d'un rotor arrière caréné.

De plus, les paliers qui maintiennent les pales tendent à s'user relativement rapidement.

Le document FR 2271121 est éloigné du domaine technique de l'invention en présentant un dispositif d'accouplement d'une pale à un étrier d'un mât d'une voilure tournante.

Ce dispositif inclut un organe de fixation par pale. Chaque organe de fixation est d'une part articulé à l'étrier par notamment un palier en élastomère, et d'autre part pourvu de quatre pattes boulonnées à une pale. En outre, chaque organe de fixation est relié à un tube de commande du pas de la pale.

On connaît aussi les documents FR 2628062, EP 0493303 et DE 102007062490.

La présente invention a alors pour objet de proposer un rotor arrière caréné robuste ayant un fonctionnement tendant à être plus linéaire que le fonctionnement de certains rotors arrière carénés.

L'invention concerne donc un rotor caréné pour le contrôle du mouvement en lacet d'un giravion, ce rotor caréné comprenant une carène délimitant une veine aérodynamique. Le rotor caréné comprend aussi un ensemble tournant agencé dans la veine pour effectuer une rotation autour d'un axe de symétrie de cette veine, cet ensemble tournant comprenant une pluralité de pales fixées chacune à un moyeu.

Dès lors, chaque pale comporte une loi de vrillage définissant un angle de vrillage maximal compris entre zéro degré inclus et 5 degrés inclus.

De plus, chaque pale comprend en envergure une première zone d'emplanture fixée au moyeu puis une deuxième zone d'extrémité, la deuxième zone s'étendant radialement à partir de la première zone vers une extrémité distale de la pale, la deuxième zone présentant une flèche arrière en étant pourvue d'un deuxième bord de fuite situé en aval d'un premier bord de fuite de la première zone selon le sens de rotation de la pale dans la veine.

Chaque première zone comporte un pied relié au moyeu par un dispositif de fixation pourvu d'un palier à roulement et d'une butée lamifiée conique.

Le rotor caréné est alors muni de pales présentant un angle de vrillage maximal réduit voire nul. On rappelle que cette caractéristique signifie que chaque section présente un angle de vrillage compris entre zéro degré inclus et 5 degrés inclus par rapport à une section de référence, une section d'emplanture par exemple. Le vrillage peut être continu, l'angle de vrillage le plus élevé séparant la section d'emplanture de la section d'extrémité de la pale.

Le palier peut alors être un « palier à roulement sans jeu » à savoir un palier présentant un jeu de fonctionnement de l'ordre de quelques centièmes de millimètre. Un palier à roulement sans jeu est donc un palier à roulement présentant un jeu minimisé, ce jeu étant éventuellement inférieur à un dixième de millimètre.

Dès lors, l'invention va à l'encontre de préjugés spécifiant qu'une pale de fenestron doit avoir une amplitude de vrillage importante et de l'ordre par exemple de 20 degrés.

En effet, la demanderesse note que la zone non linéaire observée sur la courbe de fonctionnement d'un rotor caréné résulte d'un vrillage important des pales.

En effet, lorsqu'une pale présente un pas compris dans une plage restreinte et compte tenu du vrillage de cette pale, le pied d'une pale et l'extrémité d'une pale tendent alors à posséder des incidences inverses par rapport aux flux d'air. Le pied de la pale tend alors à générer une poussée dans un sens, alors que l'extrémité de la pale tend à exercer une poussée dans un autre sens.

Dès lors, le rotor caréné tend à ne pas réagir lorsqu'un pilote positionne le pas des pales dans une telle plage.

En mettant en oeuvre une pale peu ou pas vrillée, on tend donc à résoudre ce problème. Toutes les sections de la pale poussent en effet dans le même sens. Cependant, cette technique induit des performances dégradées du rotor caréné ce qui explique qu'elle n'est pas exploitée. Pour éviter une dégradation rédhibitoire tendant à trop limiter la poussée maximale pouvant être générée par le rotor caréné, l'invention propose d'associer la mise en place d'un faible vrillage avec une deuxième zone d'extrémité de la pale présentant une flèche arrière.

Cette flèche arrière diminue l'incidence de l'air par rapport aux profils de la pale et repousse le décrochage. La flèche arrière permet à une pale non vrillée ou faiblement vrillée de pouvoir effectuer une rotation autour de l'axe de rotation du rotor à une vitesse élevée sans décrocher. Dès lors, cette flèche arrière permet au rotor caréné de générer une poussée élevée en effectuant une rotation rapide.

De plus, si la pale présente une certaine souplesse en torsion, la zone d'extrémité présente un déport pouvant tendre à déformer localement la pale sous l'effet de la portance générée par ce déport. Dans ce cas de figure, il convient de bien positionner la pale dans la veine pour éviter une déformation en battement tendant à faire sortir la pale de la veine, une telle déformation n'étant pas exclue du fait de la souplesse de ladite pale.

De plus, chaque pale est fixée au moyeu par un dispositif de fixation innovant basé sur l'utilisation d'un palier à roulement visant à réduire les frottements observés sur les paliers en élastomère de l'état de la technique.

Les paliers en élastomère usuels octroient un jeu autorisant un déplacement en battement et en traînée de la pale. Ce jeu de fonctionnement peut tendre à perturber le fonctionnement du rotor caréné et à dégrader les paliers.

Lorsque le rotor caréné développe une forte poussée, la force centrifuge exercée sur la pale tend à limiter l'effet de ce jeu. A l'inverse et à faible poussée, la pale peut se déplacer en traînée et en battement ce qui conduit alors à l'usure des paliers. De plus, ces mouvements de la pale peuvent générer des chocs perceptibles par un équipage.

Le dispositif de fixation selon l'invention permet d'y remédier.

La combinaison des caractéristiques précitées tend donc à linéariser la courbe de fonctionnement d'un rotor caréné robuste.

Ce rotor peut de plus comporter une ou plusieurs des caractéristiques additionnelles qui suivent.

La pale décrite précédemment peut par exemple présenter un léger vrillage.

Cependant, l'angle maximal peut être nul. Autrement dit, selon cette variante la pale n'est pas vrillée. Cette variante procure une stabilité optimisée, notamment lorsque la poussée exercée par le rotor caréné est nulle.

En outre, la deuxième zone peut comporter une flèche arrière présentant une inclinaison d'au moins 30 degrés, par rapport à l'envergure de la pale. Une telle flèche permet d'obtenir une poussée satisfaisante en l'absence de vrillage ou en présence d'un vrillage très faible. La flèche arrière permet de maximiser la vitesse de rotation de la pale sans augmenter le bruit émis par diminution du nombre de Mach local.

De plus, le centre de poussée aérodynamique de la pale peut être situé dans un espace s'étendant du bord de fuite de cette pale jusqu'à un axe géométrique de symétrie dudit palier pour que la flèche arrière puisse localement générer un vrillage lorsque la pale présente la souplesse en torsion adéquate.

Le centre de gravité de la pale est éventuellement situé sur ledit axe géométrique de symétrie dudit palier pour éviter une déformation du palier sous l'effet de forces centrifuges.

En outre, la deuxième zone d'extrémité peut comprendre des profils aérodynamiques présentant chacun une corde supérieure à chaque corde des profils de la première zone.

Par ailleurs, le palier est éventuellement un roulement à rouleaux de céramique. De plus, ce palier peut comporter une bague solidaire du pied de la pale. Les rouleaux de céramique présentent l'avantage de minimiser les risques d'apparition du phénomène dénommé « false brinelling » en langue anglaise.

La reprise des efforts centrifuges est effectuée par la butée lamifiée conique, la reprise des efforts résultant du mouvement éventuel en battement et en traînée de la pale étant effectué par le roulement à rouleaux. On note que cette conception ne nécessite pas l'emploi de lames torsibles ce qui permet d'optimiser la dimension du moyeu.

En outre, la butée lamifiée peut comporter une armature externe et une armature interne, un organe élastomérique de forme annulaire reliant l'armature interne à l'armature externe, le pied traversant le palier et l'organe élastomérique pour être fixé à l'armature interne par au moins une tige de fixation.

L'organe élastomérique comporte une succession de couches souples en matériau élastomère et de couches rigides.

Ce dispositif de fixation est relativement simple et peu encombrant.

L'armature interne est alors éventuellement fixée au moyeu.

De plus, le rotor comporte un levier de pas par pale, chaque levier de pas étant articulé à une armature interne.

Par ailleurs, au moins une masse d'équilibrage est fixée à ladite armature interne.

De préférence, deux masses sont fixées sur l'armature interne symétriquement par rapport à l'axe de pas de la pale pour ne pas générer d'effort latéral sur le dispositif de fixation.

En outre, l'organe élastomérique peut comporter une épaisseur radiale diminuant selon une loi de réduction d'épaisseur prédéterminée en allant de l'armature interne vers l'armature externe. Cette caractéristique vise à garantir que chaque couche d'élastomère est soumise à une même pression, malgré le changement de diamètre.

Enfin, l'invention vise un giravion comportant un rotor selon l'invention.

L'invention et ses avantages apparaîtront avec plus de détails dans le cadre de la description qui suit avec des exemples de réalisation donnés à titre illustratif en référence aux figures annexées qui représentent :
- la figure 1, un giravion selon l'invention,
- la figure 2, une vue du rotor caréné du giravion,
- la figure 3, un schéma d'une pale et du dispositif de fixation de cette pale,
- la figure 4, un schéma explicitant l'angle maximal de vrillage de la pale, et
- la figure 5, une vue présentant deux masses d'équilibrage dites « masses chinoises » qui réduisent les efforts de commande du pas.

Les éléments présents dans plusieurs figures distinctes sont affectés d'une seule et même référence.

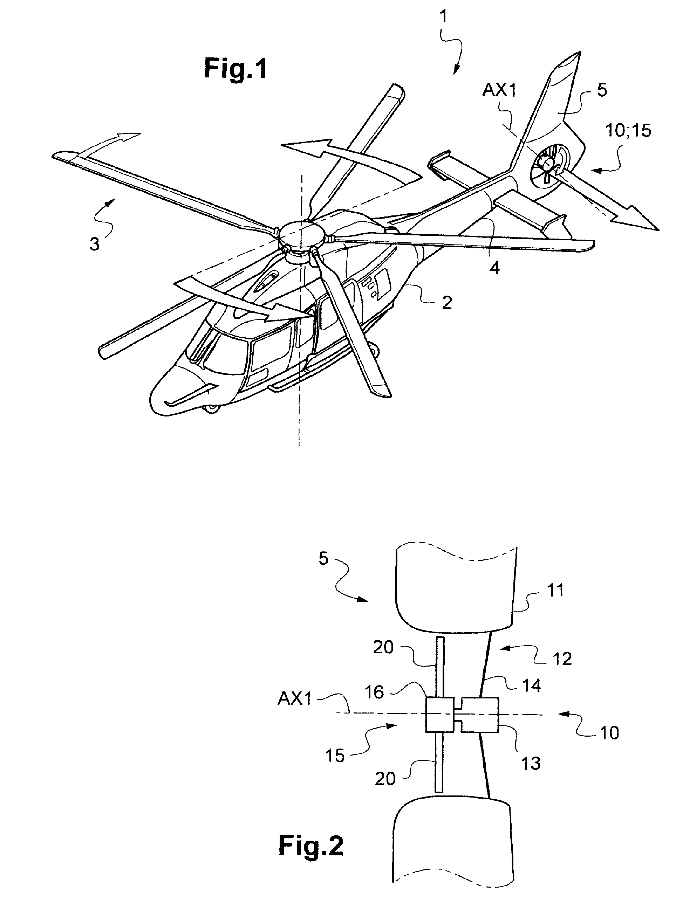

La figure 1 présente un giravion 1 muni d'un fuselage 2 portant une voilure tournante 3. Ce fuselage 2 inclut une poutre de queue 4 portant une dérive 5. Cette dérive 5 inclut un rotor caréné 10 selon l'invention muni d'un ensemble tournant 15.

En référence à la figure 2, le rotor caréné 10 comporte une carène 11 de la dérive. Ce rotor caréné 10 possède alors une veine 12 aérodynamique traversant de part en part la carène 11 selon un axe de symétrie AX1. Cet axe de symétrie AX1 peut être sensiblement orthogonal à un plan antéropostérieur de symétrie du giravion.

Dès lors, l'ensemble tournant 15 est agencé dans la veine pour effectuer une rotation autour de l'axe de symétrie AX1. A cet effet, le rotor caréné peut comprendre un moyen d'entraînement 14, tel qu'un moteur ou une boîte de transmission de puissance, soutenu par des aubes 14 dans la veine 12. L'ensemble tournant inclut par suite une pluralité de pales 20 mises en rotation par un moyeu 16 entraîné par le moyen d'entrainement 14.

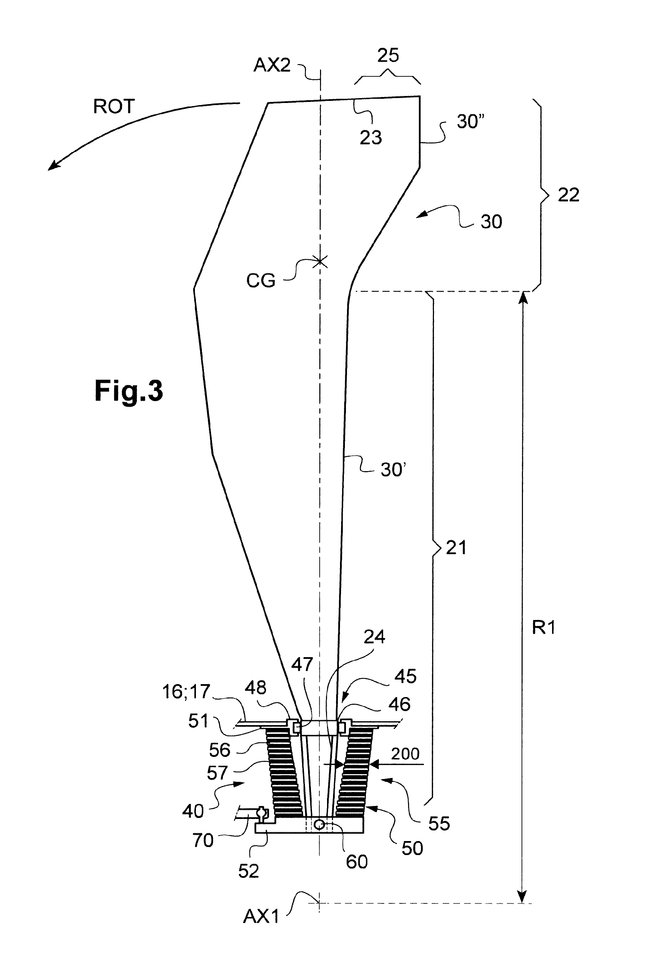

En référence à la figure 3, chaque pale 20 s'étend en envergure d'un pied 24 qui est fixé au moyeu 16 par un dispositif de fixation 50, vers une extrémité distale 25. Plus précisément, chaque pale peut être décomposée en une première zone 21 incluant le pied 24 et en une deuxième zone 22 incluant l'extrémité distale 23.

La première zone 21 s'étend alors à partir du pied jusqu'à atteindre un rayon R1 mesuré radialement à partir de l'axe de symétrie AX1, la deuxième zone 22 s'étendant à partir de ce rayon R1 jusqu'à l'extrémité distale 23.

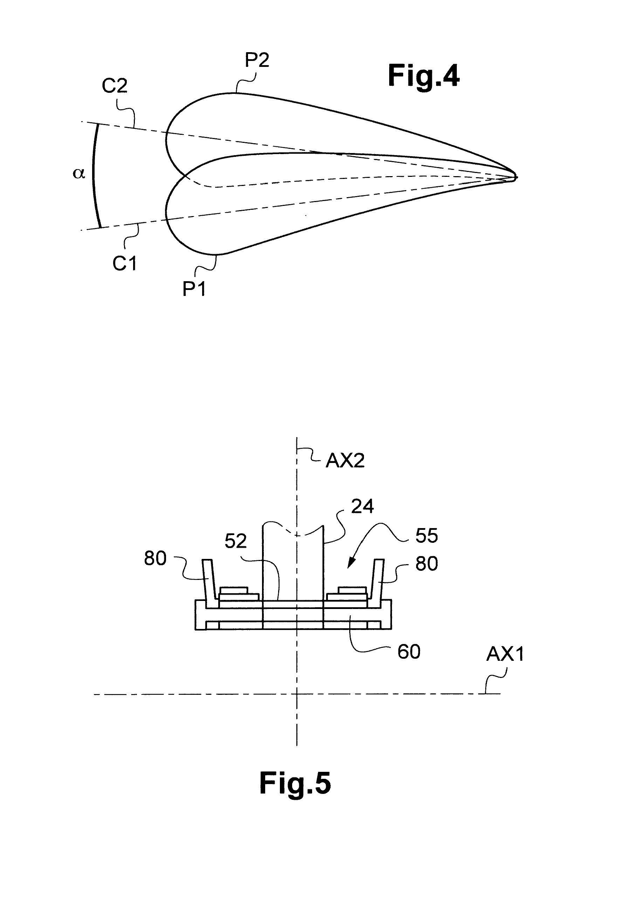

Chaque pale 20 peut être vrillée. Conformément à la figure 4, la pale peut alors comprendre une amplitude maximale de vrillage entre deux sections P1, P2 distinctes comprises dans une plage allant de zéro degré à 5 degrés, les bornes étant incluses dans cette plage.

L'angle α de vrillage entre deux sections P1, P2 peut par exemple être mesuré entre les axes de corde C1, C2 reliant le bord d'attaque au bord de fuite des sections. On appelle « axe de corde », l'axe de la pale reliant le bord d'attaque au bord de fuite d'une section selon lequel est mesurée la corde de la section.

L'angle maximal peut par exemple être atteint entre la première section de la pale, et la dernière section constituant l'extrémité distale 23.

Cependant et selon une variante, la pale n'est pas vrillée. Tous les axes de corde sont alors disposés dans un plan.

En référence à la figure 3, la deuxième zone comprend une flèche arrière présentant un déport 25 vers l'arrière, à savoir une portion décalée vers l'arrière par rapport à la première zone.

Ainsi, le bord de fuite 30 de la pale comprend un premier bord de fuite 30' au niveau de la première zone 21, et un deuxième bord de fuite 30" au niveau de la deuxième zone 22. Dès lors, le premier bord de fuite 30' est en amont du deuxième bord de fuite 30", les termes amont et aval étant à considérés en fonction du sens de rotation ROT de la pale dans la veine.

Si la pale n'est pas vrillée ou comporte une amplitude maximale de vrillage très faible selon la variante et dans le cadre d'une pale souple, ce déport permet de déformer la pale à grande vitesse de rotation du rotor pour maximiser la poussée exercée par le rotor caréné.

La flèche arrière de la deuxième zone 22 peut en outre présenter une inclinaison de 30 degrés par rapport à une flèche nulle.

En outre, le centre de gravité CG de la pale 20 peut être situé à proximité d'un axe géométrique AX2 de symétrie du dispositif de fixation 50, et notamment d'un palier de ce dispositif de fixation 50.

Eventuellement, le centre de gravité CG est localisé sur l'axe géométrique AX2.

Par ailleurs, le dispositif de fixation 50 comporte un palier 45 à roulement associé à une butée lamifiée 50.

Ce palier 45 peut comprenant un roulement à rouleaux de céramique, favorablement sans jeu, comprenant une cage interne 46, une pluralité de rouleaux 47 et une cage externe 48.

La cage interne 46 peut représenter une bague solidarisée au pied 24 de la pale. Le pied traverse alors la cage interne 46, en lui étant solidarisé.

La cage externe 48 est par exemple solidarisée à un organe 17 du moyeu 16.

En outre, la butée lamifiée 50 est une butée conique creuse traversée par le pied 24. Cette butée lamifiée est ainsi pourvue d'une armature externe 51 et d'une armature interne 52 enserrant un organe élastomérique 55. Le pied 24 traverse successivement l'armature externe 51 puis l'organe élastomérique 55 pour être fixé à l'armature interne 52 par une tige 60 de fixation.

L'armature externe 51 peut comprendre une bague solidaire de la cage externe 48 du palier. Cette armature externe 51 et cette cage externe 48 peuvent alors former conjointement une unique pièce structurelle monobloc obtenue par usinage.

L'armature externe 51 est alors fixée à un organe 17 du moyeu.

Par ailleurs, l'organe élastomérique 55 peut être muni d'une succession de couches souples 57 en matériau élastomère et de couches rigides 56. Les couches rigides peuvent être des couches métalliques, à base d'alliage ou en matériaux composites par exemple.

De plus, l'organe élastomérique a une forme annulaire conique en présentant une épaisseur 200 radiale diminuant selon une loi de réduction d'épaisseur prédéterminée en allant de l'armature interne 52 vers l'armature externe 51.

Pour modifier le pas de la pale, le rotor caréné comprend en outre un levier 70 de pas articulé à l'armature interne 52.

Ainsi, ce levier 70 engendre une rotation de l'armature externe qui provoque une modification du pas de la pale 20 par le biais de la tige 60 de fixation. La butée lamifiée 55 tolère ce type de déplacement en rotation.

Par ailleurs les efforts centrifuges exercés sur la pale 20 sont transmis au moyeu 16 par successivement la tige 60 de fixation, l'armature interne 52, l'organe élastomérique puis l'armature externe 51.

Les efforts subis par les mouvements en battement et/ou en traînée de la pale sont repris par le palier 45.

En référence à la figure 5, le rotor caréné peut comprendre au moins une masse d'équilibrage 80 fixée à l'armature interne 52, par la tige 60 de fixation par exemple.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Rotor caréné (10) pour le contrôle du mouvement en lacet d'un giravion (1), le rotor caréné (10) comprenant une carène (11) délimitant une veine (12) aérodynamique, ledit rotor caréné (10) comprenant un ensemble tournant (15) agencé dans la veine (12) pour effectuer une rotation autour d'un axe de symétrie (AX1) de ladite veine (12), cet ensemble tournant (15) comprenant une pluralité de pales (20) fixées chacune à un moyeu (16), **caractérisé en ce que :**
- chaque pale (20) comporte une loi de vrillage définissant un angle de vrillage maximal (α) compris entre zéro degré inclus et 5 degrés inclus,
- chaque pale (20) comprend en envergure une première zone (21) d'emplanture fixée au moyeu puis une deuxième zone (22) d'extrémité, la deuxième zone (22) s'étendant radialement à partir de ladite première zone (21) vers une extrémité distale (23) de la pale (20), ladite deuxième zone (22) présentant une flèche arrière en étant pourvue d'un deuxième bord de fuite (30") situé en aval d'un premier bord de fuite (30') de la première zone (21) selon le sens (ROT) de rotation de la pale (20) dans la veine (12),
- chaque première zone (21) comporte un pied (24) relié au moyeu (16) par un dispositif de fixation (40) pourvu d'un palier (45) à roulement et d'une butée lamifiée (50) conique.

2. Rotor selon la revendication 1,
**caractérisé en ce que** ledit angle maximal (α) est nul.

3. Rotor selon l'une quelconque des revendications 1 à 2,
**caractérisé en ce que** le centre de gravité (CG) de la pale (20) est situé sur un axe géométrique (AX2) de symétrie dudit palier (45).

4. Rotor selon l'une quelconque des revendications 1 à 3,
**caractérisé en ce que** ledit palier (45) est un roulement à rouleaux de céramique.

5. Rotor selon la revendication 4,
**caractérisé en ce que** ledit palier (45) comporte une bague (46) solidaire dudit pied (24).

6. Rotor selon l'une quelconque des revendications 1 à 5,
**caractérisé en ce que** ladite butée lamifiée (50) comporte une armature externe (51) et une armature interne (52), un organe élastomérique (55) de forme annulaire reliant l'armature interne (52) à l'armature externe (51), ledit pied (24) traversant ledit palier (45) et l'organe élastomérique (55) pour être fixé à l'armature interne (52) par au moins une tige (60) de fixation.

7. Rotor selon la revendication 6,
**caractérisé en ce que** ladite armature interne (52) est fixée au moyeu (16).

8. Rotor selon l'une quelconque des revendications 6 à 7,
**caractérisé en ce que** ledit rotor caréné (10) comporte un levier (70) de pas par pale, chaque levier (70) de pas étant articulé à une armature interne (52).

9. Rotor selon l'une quelconque des revendications 6 à 8,
**caractérisé en ce qu'**au moins une masse d'équilibrage (80) est fixée à ladite armature interne (52).

10. Rotor selon l'une quelconque des revendications 6 à 9,
**caractérisé en ce que** ledit organe élastomérique (55) comporte une épaisseur (200) radiale diminuant selon une loi de réduction d'épaisseur prédéterminée en allant de l'armature interne (52) vers l'armature externe (51).

11. Rotor selon l'une quelconque des revendications 6 à 10,
**caractérisé en ce que** ledit organe élastomérique (55) comporte une succession de couches souples (57) en matériau élastomère et de couches rigides (56).

12. Rotor selon l'une quelconque des revendications 1 à 11,
**caractérisé en ce que** ladite deuxième zone (22) comporte une flèche arrière présentant une inclinaison d'au moins 30 degrés.

13. Rotor selon l'une quelconque des revendications 1 à 12,
**caractérisé en ce que** ledit palier (45) est un palier à roulement sans jeu.

14. Giravion (1),
**caractérisé en ce que** ce giravion (1) comporte un rotor caréné (10) selon l'une quelconque des revendications 1 à 13.

## Patentansprüche

1. Mantelrotor (10) für die Steuerung der Gierbewegung eines Drehflügelflugzeugs (1), wobei der Mantelrotor (10) eine Verkleidung (11) aufweist, die einen Strömungskanal (12) begrenzt, wobei der Mantelrotor (10) eine sich drehende Baugruppe (15) aufweist, die in dem Strömungskanal (12) angeordnet ist, um eine Drehung um eine Symmetrieachse (AX1) des Kanals (12) auszuführen, wobei diese sich drehende Baugruppe (15) eine Mehrzahl von Rotorblättern (20) aufweist, die jeweils an einer Nabe (16) befestigt sind,
**dadurch gekennzeichnet, dass**:
- jedes Rotorblatt (20) ein Verwindungsgesetz aufweist, die einen maximalen Verwindungswinkel (α) definiert, der zwischen 0 Grad, einschließlich, und 5 Grad, einschließlich, liegt,
- jedes Rotorblatt (20) in Spannweitenrichtung einen ersten Wurzelbereich (21), der an der Nabe befestigt ist, und einen zweiten Endbereich (22) aufweist, wobei sich der zweite Bereich (22) radial ausgehend von dem ersten Bereich (21) bis zu einem distalen Ende (23) des Rotorblatts (20) erstreckt, wobei der zweite Bereich (22) nach hinten gepfeilt ist und mit einer zweiten Hinterkante (30") versehen ist, die bezüglich der Drehrichtung (ROT) des Rotorblatts (20) in dem Kanal (12) hinter einer ersten Hinterkante (30') des ersten Bereichs (21) liegt,
- jeder erste Bereich (21) einen Fuß (24) aufweist, der mit der Nabe (16) über eine Befestigungsvorrichtung (40) verbunden ist, die mit einem Wälzlager (45) und einem geschichteten, konischen Anschlag (50) versehen ist.

2. Rotor nach Anspruch 1,
**dadurch gekennzeichnet, dass** der maximale Winkel (α) gleich Null ist.

3. Rotor nach einem der Ansprüche 1 bis 2,
**dadurch gekennzeichnet, dass** der Schwerpunkt (CG) des Rotorblatts (20) auf einer geometrischen Symmetrieachse (AX2) des Rotorblatts (45) liegt.

4. Rotor nach einem der Ansprüche 1 bis 3,
**dadurch gekennzeichnet, dass** das Lager (45) ein Wälzlager mit keramischen Walzen ist.

5. Rotor nach Anspruch 4,
**dadurch gekennzeichnet, dass** das Lager (45) einen Ring (46) aufweist, der mit dem Fuß (24) fest verbunden ist.

6. Rotor nach einem der Ansprüche 1 bis 5,
**dadurch gekennzeichnet, dass** der geschichtete Anschlag (50) eine äußere Bewehrung (51) und eine innere Bewehrung (52), ein ringförmiges elastomeres Element (55), das die innere Bewehrung (52) mit der äußeren Bewehrung (51) verbindet, aufweist, wobei der Fuß (24) das Lager (45) und das elastomere Element (55) durchquert, um an der inneren Bewehrung (52) mit mindestens einer Befestigungsstange (60) befestigt zu werden.

7. Rotor nach Anspruch 6,
**dadurch gekennzeichnet, dass** die innere Bewehrung (52) an der Nabe (16) befestigt ist.

8. Rotor nach einem der Ansprüche 6 bis 7,
**dadurch gekennzeichnet, dass** der Mantelrotor (10) einen Anstellwinkel-Steuerhebel (70) pro Rotorblatt aufweist, wobei jeder Anstellwinkel-Steuerhebel (70) an einer innere Bewehrung (52) angelenkt ist.

9. Rotor nach einem der Ansprüche 6 bis 8,
**dadurch gekennzeichnet, dass** mindestens eine Ausgleichsmasse (80) an der inneren Bewehrung (52) befestigt ist.

10. Rotor nach einem der Ansprüche 6 bis 9,
**dadurch gekennzeichnet, dass** das elastomere Element (55) eine radiale Dicke (200) aufweist, die sich gemäß einer vorbestimmten Dickenverminderungsregel von der inneren Bewehrung (52) aus zur äußeren Bewehrung (51) hin vermindert.

11. Rotor nach einem der Ansprüche 6 bis 10,
**dadurch gekennzeichnet, dass** das elastomere Element (55) eine Aufeinanderfolge von weichen Schichten (57) aus elastomerem Material und von steifen Schichten (56) aufweist.

12. Rotor nach einem der Ansprüche 1 bis 11,
**dadurch gekennzeichnet, dass** der zweite Bereich (22) einen nach hinten gepfeilten Bereich aufweist, der eine Neigung von wenigstens 30 Grad hat.

13. Rotor nach einem der Ansprüche 1 bis 12,
**dadurch gekennzeichnet, dass** das Lager (45) ein Wälzlager ohne Spiel ist.

14. Drehflügelflugzeug (1),
**dadurch gekennzeichnet, dass** das Drehflügelflugzeug (1) einen Mantelrotor (10) gemäß einem der Ansprüche 1 bis 13 aufweist.

## Claims

1. A ducted rotor (10) for controlling the yawing motion of a rotorcraft (1), the ducted rotor (10) comprising a duct (11) defining an airflow passage (12), said ducted rotor (10) comprising a rotary assembly (15) arranged in the passage (12) in order to rotate about an axis of symmetry (AX1) of said passage (12), this rotary assembly (15) comprising a plurality of blades (20) which are each fixed to a hub (16),
**characterised in that**:
- each blade (20) comprises a twist relationship defining a maximum angle of twist (α) of between zero degrees inclusive and 5 degrees inclusive,
- span-wise, each blade (20) comprises a first, attachment, zone (21) fastened to the hub, then a second, end, zone (22), the second zone (22) extending radially from said first zone (21) to a distal end (23) of the blade (20), said second zone (22) having a rearward sweep, and being provided with a second trailing edge (30") located downstream from a first trailing edge (30') of the first zone (21) in the direction (ROT) of rotation of the blade (20) in the passage (12),
- each first zone (21) comprises a root (24) connected to the hub (16) by a fastening device (40) provided with a rolling bearing (45) and a conical laminated abutment (50).

2. A rotor according to Claim 1,
**characterised in that** said maximum angle (α) is zero.

3. A rotor according to any one of Claims 1 to 2,
**characterised in that** the centre of gravity (CG) of the blade (20) is located on a geometric axis (AX2) of symmetry of said bearing (45).

4. A rotor according to any one of Claims 1 to 3,
**characterised in that** said bearing (45) is a ceramic roller bearing.

5. A rotor according to Claim 4,
**characterised in that** said bearing (45) comprises a ring (46) which is integral with said root (24).

6. A rotor according to any one of Claims 1 to 5,
**characterised in that** said laminated abutment (50) comprises an external reinforcement (51) and an internal reinforcement (52), an elastomer member (55) of annular shape connecting the internal reinforcement (52) to the external reinforcement (51), said root (24) passing through said bearing (45) and the elastomer member (55) in order to be fastened to the internal reinforcement (52) by at least one fastening rod (60).

7. A rotor according to Claim 6,
**characterised in that** said internal reinforcement (52) is fastened to the hub (16).

8. A rotor according to any one of Claims 6 to 7,
**characterised in that** said ducted rotor (10) comprises one pitch lever (70) per blade, each pitch lever (70) being articulated to an internal reinforcement (52).

9. A rotor according to any one of Claims 6 to 8,
**characterised in that** at least one balance weight (80) is fastened to said internal reinforcement (52).

10. A rotor according to any one of Claims 6 to 9,
**characterised in that** said elastomer member (55) comprises a radial thickness (200) which decreases in accordance with a predetermined thickness reduction relationship from the internal reinforcement (52) to the external reinforcement (51).

11. A rotor according to any one of Claims 6 to 10,
**characterised in that** said elastomer member (55) comprises a succession of flexible layers (57) of elastomer material and of rigid layers (56).

12. A rotor according to any one of Claims 1 to 11,
**characterised in that** said second zone (22) comprises a rearward sweep having an inclination of at least 30 degrees.

13. A rotor according to any one of Claims 1 to 12,
**characterised in that** said bearing (45) is a rolling bearing without play.

14. A rotorcraft (1),
**characterised in that** this rotorcraft (1) comprises a ducted rotor (10) according to any one of Claims 1 to 13.
